Europäisches Patentamt

European Patent Office

Office européen des brevets

(11) Publication number: **0 312 175**
**A1**

## (12) EUROPEAN PATENT APPLICATION

(21) Application number: **88202282.5**

(22) Date of filing: **12.10.88**

(51) Int. Cl.4: **B60D 1/00**

(30) Priority: **14.10.87 NL 8702460**

(43) Date of publication of application:
**19.04.89 Bulletin 89/16**

(84) Designated Contracting States:
**AT BE CH DE ES FR GB IT LI LU NL SE**

(71) Applicant: **DECKERS B.V.**
**Lammenschansweg 138**
**NL-2321 JX Leiden(NL)**

(72) Inventor: **Van Leeuwen, Cornelis, Johannes,**
**Leonardus**
**Heemraadlaan 18**
**2352 RH Leiderdorp(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) Articulated lorry with improved coupling system.

(57) Articulated lorry, comprising a tractor (1) and a central axle trailer (2) detachably coupled to the tractor, the body (6) of the trailer (2) being mounted on a slide construction (8a, 8b, 9, 10, 11) movable along the chassis (5) of the trailer in lengthwise direction thereof, the tractor (1) being provided with a control rod mechanism (18, 19, 20, 21) fixed on the chassis (3) thereof and engaging with the slide construction (8a, 8b, 9, 10, 11) so that when the articulated lorry starts to take a bend the slide construction is moved in the direction away from the tractor (1).

Fig-1

EP 0 312 175 A1

## Articulated lorry with improved coupling system.

The invention relates to an articulated lorry, comprising a tractor unit carrying a body and a trailer carrying a body and coupled thereto, the trailer being a central axle vehicle which is detachably coupled to the tractor unit by means of a catchmouth coupling or similar device.

A major problem with which manufacturers of articulated lorries are faced is obtaining the greatest possible useful loading capacity with the maximum total length of the whole combination permitted under international regulations, which is currently 18 m. There are essentially two problems which set a limit on the possible solutions. First, the driver's cab takes up quite a substantial part of the overall length, a minimum limit having to be set for the length thereof in order to provide the necessary comfort to the driver. In the past, attempts were made to gain disposable length for the loading space by flattening the cab, but there is an increasing trend and need to provide driver's cabs of greater length, in order to provide more comfort for drivers, who are subject to ever-increasing demands.

A second problem is the coupling between the trailer and the tractor unit. A traditional coupling structure, in which a coupling triangle fixed on the rotating wheel set of a multi-axle trailer is fastened with the coupling eye on a coupling pin fixed on the rear of the tractor unit, requires a relatively large free space between the tractor unit and the trailer to produce the coupling. In order to eliminate this disadvantage at least partially, a coupling design was developed under the name of "catchmouth coupling" or "dish coupling", in which the trailer is designed as a central axle vehicle and has a coupling triangle which is fixed to the chassis and during coupling with the coupling eye fixed thereto engages automatically with a so-called catchmouth fixed at some distance from the rear of the tractor unit on the bottom of the chassis thereof, and is automatically fastened therein on the coupling pin provided for the purpose. With this design the distance between the tractor unit and the trailer can be reduced compared with the distance of traditional couplings. This distance is, however, still bound to a minimum value, in order to prevent the body of the tractor unit and that of the trailer from touching each other when the articulated lorry is taking a bend.

The object of the invention is to produce an articulated lorry with which it is possible to shorten the distance between the tractor unit and the central axle trailer compared with the distance in the articulated lorries known hitherto, yet without there being any risk of the bodies coming into contact with each other when a bend is being taken, and according to the invention this object is achieved in that the body of the trailer is mounted on a slide which moves along the chassis in the lengthwise direction of the trailer, while the tractor unit is provided with a control rod mechanism which is fixed on the chassis thereof and engages with the slide of the trailer, and which is made up in such a way that when the articulated lorry starts to take a bend the slide is moved in the direction away from the tractor unit.

With the design according to the invention it is possible to have the body of the trailer and that of the tractor unit very close together when the vehicle is travelling straight ahead, which means that the possibility is obtained of making as large a part as possible of the stipulated maximum length of 18 m for the overall combination be taken up by the bodies of the tractor unit and trailer forming the loading space. When a bend is being taken, the above-mentioned so-called control rod mechanism moves the slide with the body of the trailer backwards, in such a way that a great enough distance is created between the two bodies to prevent them from coming into contact with each other.

An expedient embodiment is produced according to the invention through the control rod mechanism having two telescopic rods, which in the completely retracted position are of equal length, and which are connected by one end to the chassis of the tractor unit so that they pivot laterally and vertically, said ends being fixed at the same distance on either side of the longitudinal axis of the tractor unit at a distance therefrom which is at least equal to half the distance between the longitudinal axis and the sides of the tractor unit, while the other ends of the rods extending in the direction of the rear of the tractor unit are hingedly fixed in essentially converging fashion to a rigid pushing element which can be made to engage with an essentially rigid counterstructure fixed on the slide of the trailer and extending to below the tractor unit.

In this embodiment, when the tractor unit and the trailer are in line with each other when travelling straight ahead, the telescopic rods are in the fully retracted position in which they act as rigid rods and are at their shortest length, while the body of the trailer is as close as possible to the body of the tractor unit. When a bend is being taken, the telescopic rod at the side where the tractor unit and the trailer form an angle with each other during the taking of a bend is in the fully retracted position, in which this rod is turned outwards relative to the tractor unit about its hinged fastening to the tractor unit, as a result of which the opposite end describes a circular path and thereby exerts a pushing force on the counterstructure fixed on the slide of the trailer, so that the slide is pressed in a direction away from the tractor unit. The other telescopic rod is extended during the said movement. This movement process takes place during the taking of a bend, either to one side or to the other.

A very expedient design is obtained if the trailer is provided with an independent drive device for moving the slide, which is provided with a control element which can be moved from a neutral position into a position for setting the drive device in motion in such a way that the slide is moved in the direction away from the tractor unit, while the rigid counterstructure is provided with means which mate with the pushing element of the control rod mechanism, and which can take the control element from the neutral position into the said operating position when a predetermined minimum pushing force of or on the pushing element is reached and exceeded.

One advantage obtained with this embodiment is that it prevents excessive bending forces from being exerted on the telescopic rods, in particular the fully retracted working telescopic rod, which means that the rods do not need to be made with maximum strength. Another advantage obtained with this design is that is prevented that on braking in the bend for example, the inertia forces acting as a result on the slide with body of the trailer move the slide with body forward, with the result that via the fully retracted rigid rod of the control rod mechanism, which is in a position turned out of the centre, lateral forces are exerted on the tractor unit chassis and thereby on the steering assembly of the tractor unit.

The means mating with the pushing element preferably comprise a relatively rigid leaf spring which is fixed to the rigid counterstructure and which bends on reaching of a predetermined pushing force thereon by the pushing element, in such a way that it is brought into contact with the control element placed behind the leaf spring.

An advantageous embodiment can be obtained according to the invention if the drive device for the slide of the trailer has at least one double-acting piston/cylinder unit, the piston or the cylinder of which is fixed to the chassis of the trailer, and the cylinder or the piston to the slide, said piston/cylinder unit being incorporated in a driving fluid circuit which is fed by a pressurized driving fluid source, said circuit also containing the above-mentioned control element, comprising a valve, in such a way n the control element is in the neutral position the piston/cylinder unit exerts a relatively small driving force on the slide in the direction towards the tractor unit, and when the valve is in the operating position pressurized driving fluid is conveyed to the piston/cylinder unit in such a way that a relatively great driving force is exerted on the slide in the direction away from the tractor unit.

The drive device here constitutes both a device for moving the slide of the trailer backwards during the taking of a bend and a device for holding the slide with the body of the trailer in a position in which they are as close as possible to the tractor unit.

In order to prevent the body of the tractor unit and that of the trailer from being able to touch each other when the articulated lorry is travelling over potholes and bumps, it is preferable that in the operating position the rods of the control rod mechanism extend from the hinged fastening points on the chassis of the tractor unit slanting downwards in the direction of the trailer.

An advantageous embodiment is also obtained if the pushing element to which the rods of the control rod mechanism are fixed is formed by a bumper which is detachably connected to the rear of the tractor unit, and which is provided with means for connecting it detachably to the counterstructure of the body slide of the trailer.

The articulated lorry according to the invention can also be made more readily manoeuvrable if an additional control valve is fitted for the drive device of the slide, said valve being operable independently of the position of the articulated lorry so that it drives the drive device to move the slide of the trailer both forwards and backwards.

With these measures it is made easier to move a body fitted on the trailer with the rear loading side against a loading platform, without it being necessary to manoeuvre the entire combination against the platform. It is merely necessary to move the articulated lorry into the vicinity of the platform and then to move the slide with the body into the correct position. This also makes it possible to move the two bodies into a through-loading position against each other.

It is also possible by means of the movable slide structure to place exchange containers in a simple manner in the correct position on the trailer. Instead of the whole articulated lorry having to be manoeuvred into the correct position here, only the slide need be moved into position.

The invention will now be explained in greater detail with reference to the drawing, in which an embodiment of an articulated lorry with coupling system according to the invention is shown by way of example.

Fig. 1 shows a top view of part of an articulated lorry which according to the invention with coupled tractor unit and trailer is in the position in which the articulated lorry is travelling straight ahead.

Fig. 2 shows the same view as Fig. 1, with the articulated lorry taking a bend.

Fig. 3 gives a side view of the articulated lorry shown in Fig. 1, with partially cutaway parts.

Fig. 4 gives a perspective view of the coupling system according to the invention for the articulated lorry shown in Figs. 1 to 3.

Fig. 5 shows a cross section along the line v-v in Fig. 1 through an embodiment of the slide structure which is used for the trailer of the articulated lorry shown in Figs. 1 to 3.

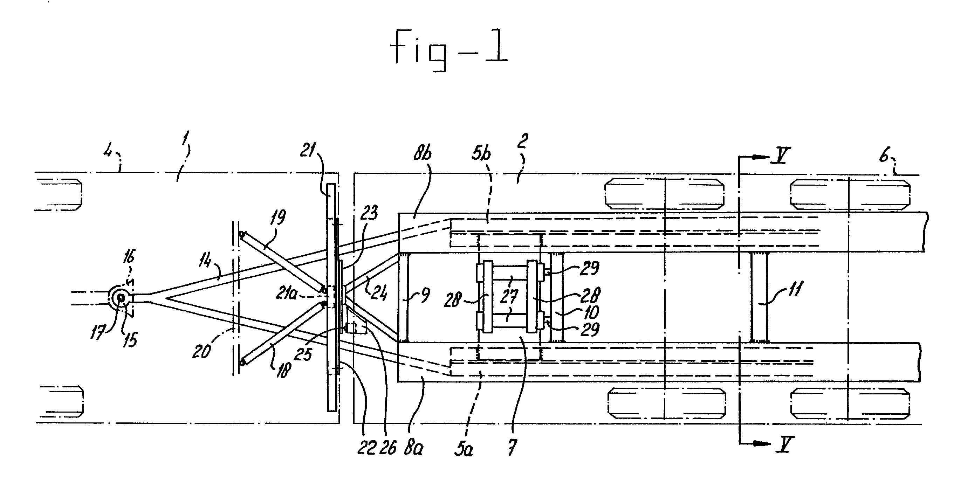

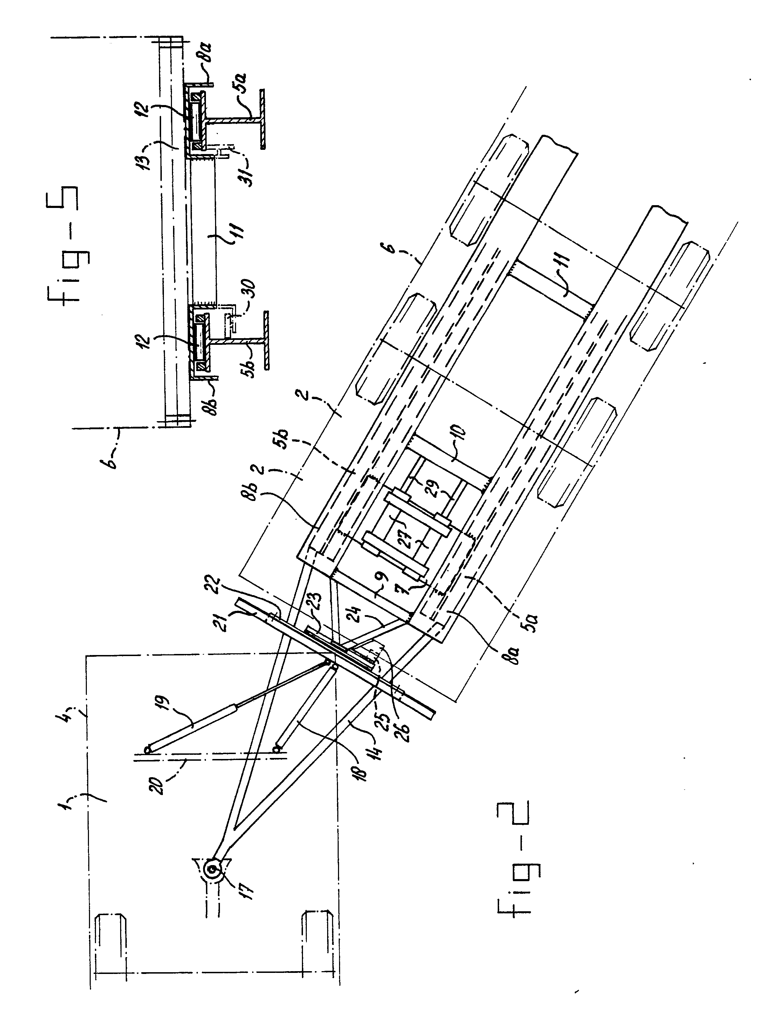

Figs. 1 and 2 show a top view of the coupling system of an articulated lorry according to the invention, in which only the rear part of the tractor unit 1 and the front part of the trailer 2 in the form of a twin-axle vehicle are shown. The body 4 is fixed on the chassis 3 of the tractor unit, while the body 6 is disposed on the chassis 5 of the trailer by means of a movable slide structure which will be described in greater detail below.

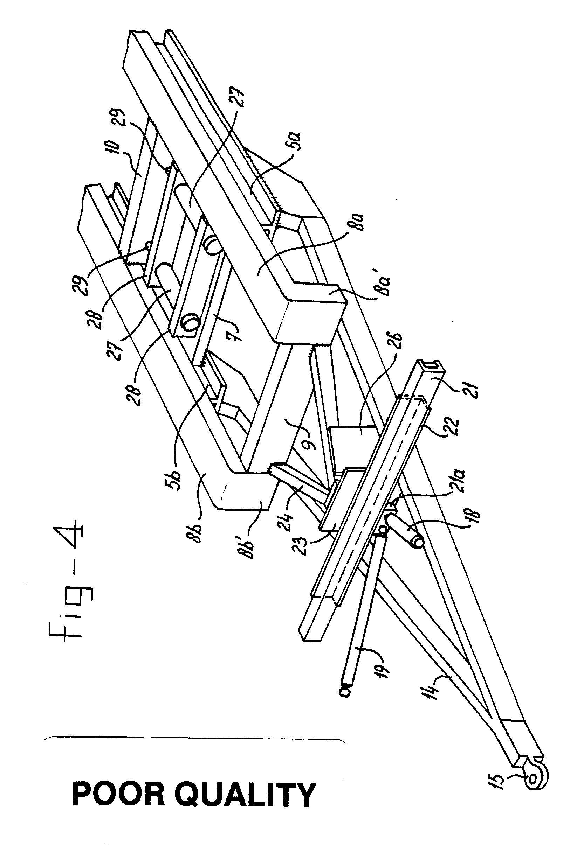

The chassis 5 of the trailer comprises two parallel I bars 5a and 5b (see in particular Fig. 4), which are connected to each other by transverse bars which are spaced apart, and one of which is shown in the drawing and indicated by reference number 7. Supported on the top body parts of the I bars 5a, 5b are inverted U sections 8a and 8b, which are connected to each other by transverse bars which are spaced apart, and three of which are shown in the drawing, indicated by 9, 10 and 11. The rigid slide structure formed by the U sections 8a, 8b and the transverse bars is supported by the I bars 5a, 5b in such a way that it moves via roller bearings 12. The body 6 is fixed in a manner known per se on transverse bars 13 which are spaced apart and fixed on the top side of the U sections 8a, 8b (see Fig. 5). As can be seen clearly in Fig. 4, the U sections 8a, 8b are bent over downwards at their ends, these flanged end parts 8a′ and 8b′ forming a stop against the ends of the I bars, in order to prevent the slide structure from falling backwards off the end of the trailer. The I bars 5a, 5b of the trailer chassis also have welded onto them in a manner known per se a rigid coupling triangle 14, which with the eye 15 fixed thereto engages in a manner known per se with a catchmouth 16 fixed under the chassis 3 of the tractor unit 1 and is automatically coupled therein with a coupling pin 17.

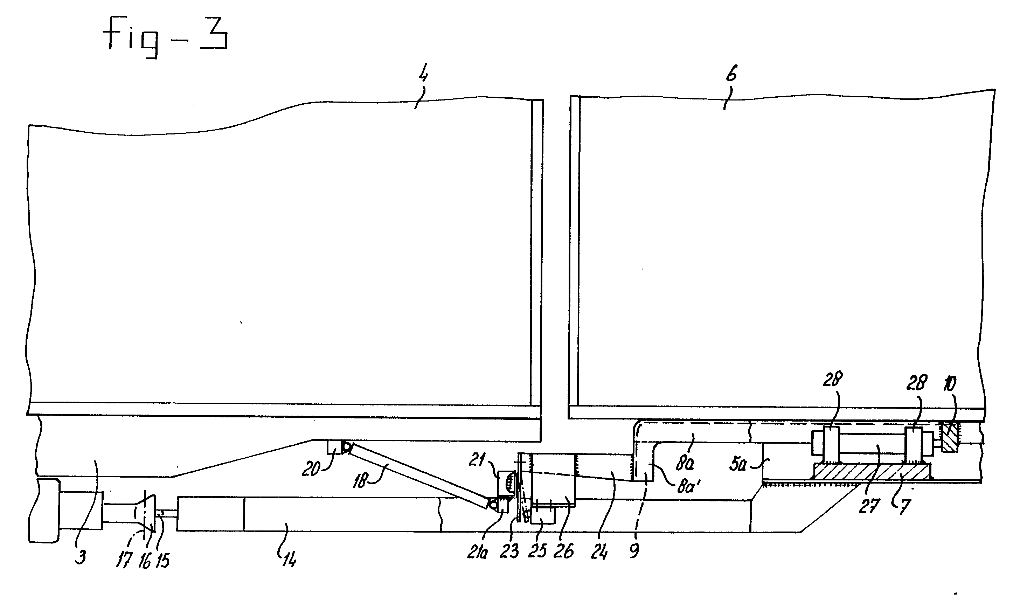

A so-called control rod system is fixed under the chassis 3 of the tractor unit, for the purpose of moving the above-described slide structure backwards when the articulated lorry is taking a bend. This rod system comprises two identical telescopic extending and retracting rods 18 and 19, which are fully retracted in the position shown in Fig. 1, in which the tractor unit 1 and trailer 2 are in line with each other. The rods 18, 19 are fixed with one end capable of pivoting in all directions to a transverse bar 20 fixed on the chassis 3 (see Fig. 3), said ends lying at a distance from each other and being an equal distance on either side of the longitudinal axis of the tractor unit, and at a distance therefrom which is at least equal to half the distance between the longitudinal axis and the sides of the tractor unit. The other ends of the rods 18, 19 extending in the direction of the rear side of the tractor unit are hingedly fixed in the immediate vicinity of each other to a rigid pushing element 21 which in the embodiment shown is formed by the rear bumper of the tractor unit, which for that purpose is detachably fixed to the tractor unit on a fixing structure which is easy to achieve by an expert, and is not shown in any further detail. This structure is designed in such a way that in the coupled position of the trailer to the tractor unit the rod system 18, 19 with the detached bumper 21 rests on an angle iron 22, which extends in the transverse direction and is fixed to a relatively rigid leaf spring 23, which is in turn fixed to a rigid triangle 24, which is welded to the connecting bar 9 between the flanged ends 8a′ and 8b′ of the U sections 8a, 8b. The telescopic rods 18 and 19 are attached to a separate fastening element 21a which is fixed to the bottom side of the bumper 21, and which in the operating position rests against the bottom side of the leaf spring 23, which is fastened by its top side to the triangle 24. Provision is also made behind the leaf spring 23 for a control valve 25, with which the bottom side of the leaf spring 23 can be brought into contact in a manner described below to control a drive device, to be described in greater detail, for the slide structure of the trailer. The control valve is fastened on a plate 26 fixed on the triangle.

The trailer 2 is provided with a drive device for moving the above-described slide structure, said drive device in the embodiment shown comprising a set of double-acting piston/cylinder units, the cylinders 27 of which are fixed in two fixing plates 28 which are spaced apart and which are fixed on the transverse bar 7 between the I bars 5a, 5b of the chassis of the trailer. The pistons (not visible in the drawing) moving in the cylinders 27 are fixed by means of piston rods 29 to the transverse bar 10 between the U sections 8a, 8b of the movable slide of the trailer.

The piston/cylinder units are accommodated in a driving fluid (air or oil) circuit (not shown), in which the control valve 25 and a pressurized driving fluid source (not shown) are also accommodated, in such a way that when the control valve 25 is acted upon by the leaf spring 23 (in a manner to be described below) pressurized fluid is conveyed to the cylinder units 27, 29, in such a way that the pistons are pressed outwards, and the U sections 8a, 8b are moved backwards along the I bars 5a, 5b to a position shown in Fig. 2. In the neutral position (in a position shown in Fig. 1) the pistons are held in the retracted position in the cylinders 27 under slight overpressure.

As indicated in Fig. 4 by dashed lines, for good guidance of the U sections 8a, 8b during the movement thereof along the I bars 5a, 5b, to prevent undesirable movements upwards or to the side, guide wheels 30 and 31 can be provided on the U sections, said guide wheels being in contact with the inside of the centre part of the I bars and the bottom side of the top part thereof respectively.

The working of the above-described coupling system will now be explained.

In the position shown in Fig. 1, in which the articulated lorry is travelling straight ahead, the rods 18, 19 are fully retracted, forming a rigid bar. The U sections 8a, 8b are in this position held in a front position in which they project with their ends 8a′, 8b′ some distance beyond the ends of the I bars 5a, 5b. The pistons of the cylinders 29 are in the retracted position here. During the taking of a bend (see Fig. 2) one of the telescopic rods 18, 19 - rod 18 in the example shown - is swung outwards relative to the chassis of the tractor unit about its end pivoting on the bar 20, this rod maintaining its retracted position, while the end thereof fixed to the bumper 21 describes a circular arc and thereby exerts a pressure on the bumper 21 which thereby goes or tries to go backwards, and exerts a pressure on the leaf spring 23 and via the latter on the triangle 24, so that a pushing force is thus exerted on the U sections 8a, 8b, which will have the tendency to move backwards. In order to prevent the rod 18 from being over-stressed during the turning from its position shown in Fig. 1 to the position shown in Fig. 2, it is ensured that on reaching of a predetermined force the leaf spring 23 bends backwards to a position such as that shown by dashed lines in Fig. 3, in such a way that the control valve 25 is actuated and the pistons of the cylinder unit 27, 29 are driven in the manner described above to their extended position, as shown in Fig. 2, while the U sections 8a, 8b are driven backwards to the position shown in Fig. 2, in other words, to a position in which the body 6 is not in contact with the body 5, despite the fact that in the position shown in Fig. 1 the body 6 is relatively close to the body 4. The other telescopic rod 19 is extended in the manner shown in Fig. 2 during the taking of the bend. During the taking of a bend in the other direction the telescopic rod 19 is turned in the retracted position, and the rod 18 is extended.

It can be seen in Fig. 3 that the rod system 18, 19 slopes downwards when the trailer is coupled to the bumper 21. This means that when travelling over uneven parts of the road the rods 18, 19 describe a circular arc with their ends in a vertical plane, with the result that under those circumstances a pushing force is exerted again on the slide of the trailer, and the bodies 4 and 6 are prevented from touching each other.

The circuit of piston/cylinder unit 27, 29 can also be provided with an additional control valve, by means of which the piston/cylinder unit can be operated independently of the control mechanism made up of the leaf spring 23 and the valve 25, for example by the driver of the articulated lorry. In this way, the bodies 4 and 6 can, for example, be moved against each other by moving the slide structure, in order to obtain a through-loading possibility, so that the articulated lorry with coupled trailer can be loaded in its entirety. This also gives the possiblity of moving the body of the trailer against a loading platform without relatively difficult manoeuvring of the entire articulated lorry.

It is pointed out that the invention is not limited to the embodiments described above with reference to the drawing, but extends to modified embodiments which are within the scope of the invention.

## Claims

1. Articulated lorry, comprising a tractor unit carrying a body and a trailer carrying a body and coupled thereto, the trailer being a central axle vehicle which is detachably coupled to the tractor unit by means of a catchmouth coupling or similar device, characterized in that the body of the trailer is mounted on a slide which moves along the chassis in the lengthwise direction of the trailer, while the tractor unit is provided with a control rod mechanism which is fixed on the chassis thereof and engages with the slide of the trailer, and which is made up in such a way that when the articulated lorry starts to take a bend the slide is moved in the direction away from the tractor unit.

2. Articulated lorry according to Claim 1, characterized in that the control rod mechanism has two telescopic rods, which in the completely retracted position are of equal length, and which are connected by one end to the chassis of the tractor unit so that they pivot laterally and vertically, said ends being fixed at the same distance on either side of the longitudinal axis of the tractor unit at a distance therefrom which is at least equal to half the distance between the longitudinal axis and the sides of the tractor unit, while the other ends of the rods extending in the direction of the rear of the tractor unit are hingedly fixed in essentially converging fashion to a rigid pushing element which can be made to engage with an essentially rigid counterstructure fixed on the slide of the trailer and extending to below the tractor unit.

3. Articulated lorry according to Claim 2, characterized in that the trailer is provided with an independent drive device for moving the slide which is provided with a control element which can be moved from a neutral position into a position for setting the drive device in motion in such a way that the slide is moved in the direction away from the tractor unit, while the rigid counterstructure is provided with means which mate with the pushing element of the control rod mechanism, and which can take the control element from the neutral position into the said operating position when a predetermined minimum pushing force of or on the pushing element is reached and exceeded.

4. Articulated lorry according to Claim 3, characterized in that the means mating with the pushing element comprise a relatively rigid leaf spring which is fixed to the rigid counterstructure and which bends on reaching of a predetermined pushing force thereon by the pushing element, in such a way that it is brought into contact with the control element placed behind the leaf spring.

5. Articulated lorry according to Claim 3 and/or 4, characterized in that the drive device for the slide of the trailer has at least one double-acting piston/cylinder unit, the piston or the cylinder of which is fixed to the chassis of the trailer, and the cylinder or the piston to the slide, said piston/cylinder unit being incorporated in a driving fluid circuit which is fed by a pressurized driving fluid source, said circuit also containing the abovementioned control element, comprising a valve, in such a way that when the control element is in the neutral position the piston/cylinder unit exerts a relatively small driving force on the slide in the direction towards the tractor unit, and when the valve is in the operating position pressurized driving fluid is conveyed to the piston/cylinder unit in such a way that a relatively great driving force is exerted on the slide in the direction away from the tractor unit.

6. Articulated lorry according to one of Claims 2 to 5, characterized in that in the operating position the rods of the control rod mechanism extend from the hinged fastening points on the chassis of the tractor unit slanting downwards in the direction of the trailer.

7. Articulated lorry according to one of Claims 2 to 6, characterized in that the pushing element to which the rods of the control rod mechanism are fixed is formed by a bumper which is detachably connected to the rear of the tractor unit, and which is provided with means for connecting it detachably to the counterstructure of the body slide of the trailer.

8. Articulated lorry according to one of the preceding claims, characterized in that an additional control valve is fitted for the drive device of the slide, said valve being operable independently of the position of the articulated lorry so that it drives the drive device to move the slide of the trailer both forwards and backwards.

# Fig-1

EP 0 312 175 A1

Fig-5

Fig-2

EP 0 312 175 A1

fig-3

EP 0 312 175 A1

fig-4

EP 0 312 175 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | EP-A-0 223 640 (R. JEANSON)<br>* Page 5, lines 3-16; figures 1-2 *<br>--- | 1 | B 60 D 1/00 |
| A | DE-A-3 145 871 (E. LA FORCE)<br>* Page 16, line 27 - page 18, line 34, figures 1-2,4 *<br>--- | 1 | |
| A | DE-A-3 328 123 (E. WACKENHUT)<br>* Page 8, line 7 - page 10, line 6, figures 1-6 *<br>--- | 1 | |
| A | DE-A-3 504 508 (P. SCHMITZ)<br>* Page 9, line 9 - page 5, line 5; figure 4 *<br>----- | 1 | |

TECHNICAL FIELDS SEARCHED (Int. Cl.4)

B 60 D
B 62 D

The present search report has been drawn up for all claims

| Place of search | Date of completion of the search | Examiner |
|---|---|---|
| THE HAGUE | 18-01-1988 | LINTZ C.H. |

EPO FORM 1503 03.82 (P0401)